**Europäisches Patentamt**

**European Patent Office**

**Office européen des brevets**

(19)

(11) Numéro de publication: **0 132 181**
**A1**

(12) # DEMANDE DE BREVET EUROPEEN

(21) Numéro de dépôt: **84401354.0**

(22) Date de dépôt: **26.06.84**

(51) Int. Cl.⁴: **A 01 G 9/22**

(30) Priorité: **13.07.83 FR 8311696**

(43) Date de publication de la demande:
**23.01.85 Bulletin 85/4**

(84) Etats contractants désignés:
**BE CH DE GB IT LI NL**

(71) Demandeur: **Blaison, Michel**
**16, rue de Senlis Thiers s/Theve**
**F-60520 La Chapelle en Serval(FR)**

(72) Inventeur: **Blaison, Michel**
**16, rue de Senlis Thiers s/Theve**
**F-60520 La Chapelle en Serval(FR)**

(74) Mandataire: **Faber, Jean-Paul**
**CABINET FABER 34, rue de Leningrad**
**F-75008 Paris(FR)**

(54) **Perfectionnements aux serres.**

(57) Serres pour la culture.

Perfectionnements aux serres du type constitué d'une structure métallique formée de fermes avec des arbalétriers (10) supportant des pannes (6), sur lesquelles sont fixées des barres à vitres (7) supportant le vitrage de la toiture, caractérisé en ce qu'elles comportent des supports 12 pour surélever les pannes (6), par rapport aux fermes et sous chaque barre à vitres (7) des volets (19) montés basculants et reliés à des moyens pour commander leur basculement.

FIG.2

EP 0 132 181 A1

Croydon Printing Company Ltd.

La présente invention vise des serres pour les cultures horticoles, maraîchères etc....

Dans les serres, on prévoit à l'intérieur des installations de rideaux appelées ombrages, qui sont destinées à protéger les plantes lorsque le soleil est trop fort. En réalité, ces ombrages sont encombrants, peu pratiques et lorsqu'ils sont repliés ils absorbent une quantité de lumière importante. De plus, on a constaté qu'ils forment des nappes chaudes qui gênent considérablement la ventilation. De toutes façons, durant la période chaude, ces ombrages ne dispensent pas de blanchir les vitres des serres.

L'un des buts de la présente invention est de réaliser une serre qui permet, d'une part, de supprimer les ombrages et, d'autre part, d'éviter à avoir à blanchir les vitres.

La serre, selon l'invention, est du type constitué d'une structure métallique formée de fermes, avec des arbalétriers supportant des pannes sur lesquelles sont fixées des barres à vitres supportant le vitrage de la toiture, et est caractérisée en ce qu'elle comporte des supports pour surélever les pannes par rapport aux fermes, et sous chaque barre à vitres, des volets montés basculants et reliés à des moyens pour commander leur basculement.

Grâce à cette disposition, on peut masquer les vitres de la toiture pour permettre de régler le pourcentage de lumière que doit recevoir la serre.

De préférence, les barres à vitres sont du type à double vitrage présentant une rainure destinée à recevoir des têtes de vis pour la fixation sur les pannes, les volets étant montés articulés sur des axes solidaires de noix engagés dans les rainures.

Les volets peuvent être en aluminium mince, réfléchissants sur leurs deux faces, ou sur une face seulement, l'autre étant noir.

Suivant une caractéristique constructive, les volets disposés entre deux pannes voisines, sont reliés entre

0132181

eux par des tringles, tandis que le volet situé à une extrémité est relié par une biellette à un organe moteur pour commander le basculement de l'ensemble desdits volets disposés entre deux pannes voisines.

La serre peut comporter le long, d'au moins, un arbalétrier de l'extrémité de la structure métallique, un arbre guidé dans des paliers et entraîné par un moteur, une série de pignons calés sur ledit arbre, chaque pignon correspondant à une série de volets disposés entre deux pannes voisines, et coopérant avec une crémaillère dont une extrémité est articulée à la biellette reliée à un volet d'extrémité, ladite crémaillère étant guidée dans un étrier monté libre autour du pignon.

Enfin, il est prévu le long de chacun des arbalétriers d'une même ferme d'extrémité, un arbre guidé dans des paliers correspondants, l'un des arbres étant relié à un moteur par une extrémité, tandis que l'autre extrémité est reliée par un cardan à l'extrémité correspondante de l'autre arbre.

L'invention va maintenant être décrite avec plus
de détails en se référant à un mode  de réalisation particulier  donné  à titre d'exemple seulement, et représenté
aux dessins annexés dans lesquels :

Figure 1 est une vue en perspective schématique
d'une serre,

Figure 2 est une vue en perspective montrant une
partie d'une ferme d'une serre,

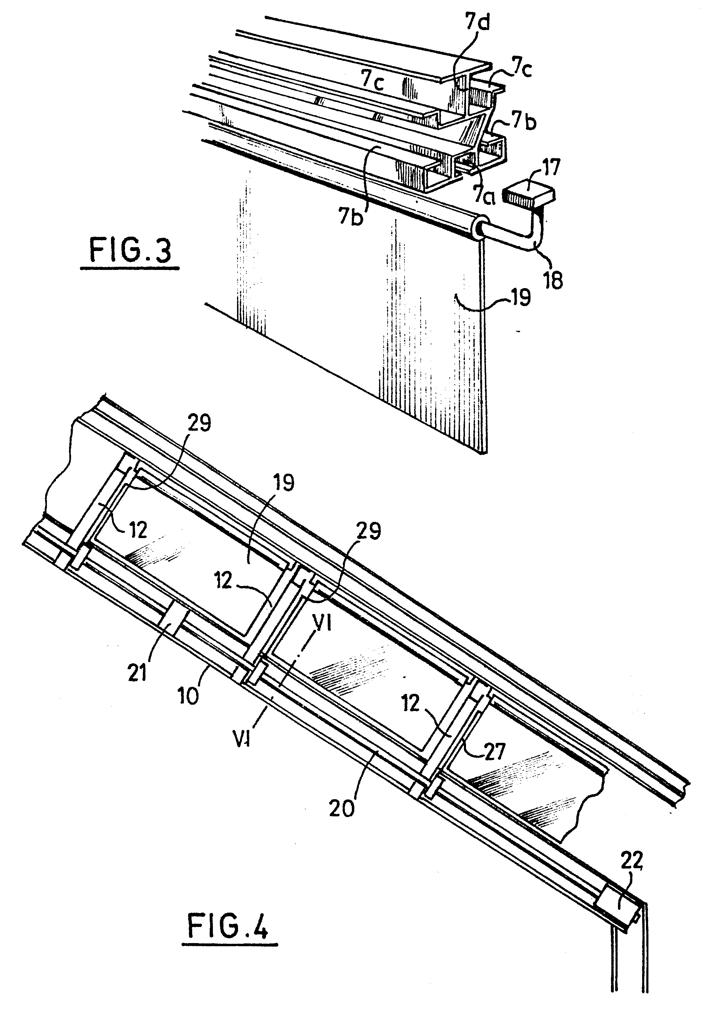

Figure 3 montre à plus grande échelle, en perspective, un détail,

Figure 4 est une vue en élévation de face, d'une
partie d'une ferme d'une serre,

Figure 5 est une vue schématique montrant le fonctionnement des volets,

Figure 6 est une vue en coupe suivant la ligne
VI-VI de la figure 3,

Figure 7 est une vue en coupe suivant la ligne
VII-VII de la figure 6,

Figure 8 montre en perspective, un détail du montage des volets pour les ouvrants.

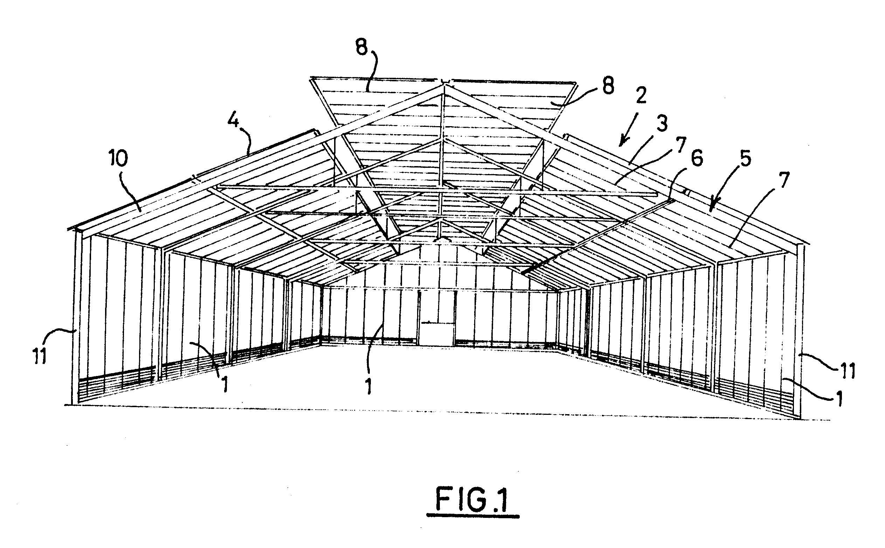

A la figure 1, on a représenté schématiquement une
serre qui comprend des parois latérales 1, un toit 2 à deux
versants 3-4, formé d'une série de fermes 5 supportant des
pannes 6 sur lesquelles sont montées des barres à vitres 7.

Au voisinage du faîtage, il est prévu une série
d'ouvrants 8.

Les fermes 5 comportent deux arbalétriers 10 solidaires de poteaux verticaux 11.

La figure 1 montre une serre classique, telles
qu'elles sont actuellement fabriquées.

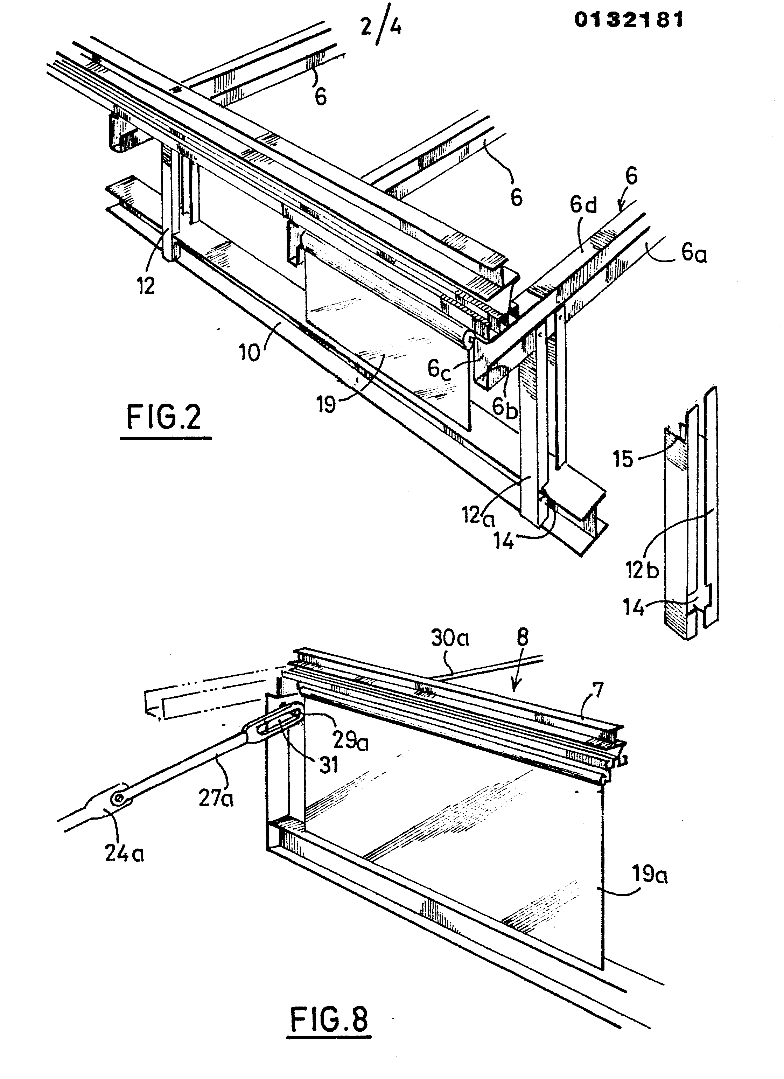

Les arbalétriers 10 sont réalisés avec des profilés
à section en I (voir figure 2), et conformément à l'invention,
il est prévu une série de supports verticaux 12 destinés à
surélever les pannes 6. Ces supports verticaux sont constitués de deux profilés en L 12a et 12b qui présentent chacun une fente 14 pour leur permettre de s'engager sur l'aile supérieure du profilé 10 et qui sont soudés à celui-ci.

Les pannes 6 sont constituées par des profilés en C qui présentent, une âme 6b, deux ailes 6a et 6c et un retour 6d.

Les supports 12 à leur extrémité libre ont une aile découpée afin de présenter une assise 15 pour l'âme 6b, tandis que l'autre aile vient porter contre l'aile 6a et est rivetée ou soudée à celle-ci.

Sur les pannes 6 sont fixées par boulonnage les barres à vitres 7 qui présentent un canal 7a pour l'engagement des têtes de boulons, deux surfaces d'appui 7b pour supporter des vitres, deux autres surfaces d'appui 7c pour suporter des vitres et un voile 7d pour recevoir un joint d'étanchéité destiné à coopérer avec les vitres supportées par les surfaces 7c.

On réalise ainsi un double vitrage qui est très efficace et qui permet notamment pendant l'hiver, d'économiser du chauffage.

Dans le canal 7a de la barre à vitre 7, on engage des noix 17 qui sont solidaires chacune d'un axe 18 sur lequel s'articule un volet 19.

On place ainsi, sous chaque barre à vitre 7, une série de volets 19, par exemple en aluminium mince, ces volets pouvant sur une face être réfléchissants et sur l'autre face, être peints en noir.

Comme les volets 19 peuvent s'étendre verticalement sous les barres à vitres 7, ils absorbent peu de lumière.

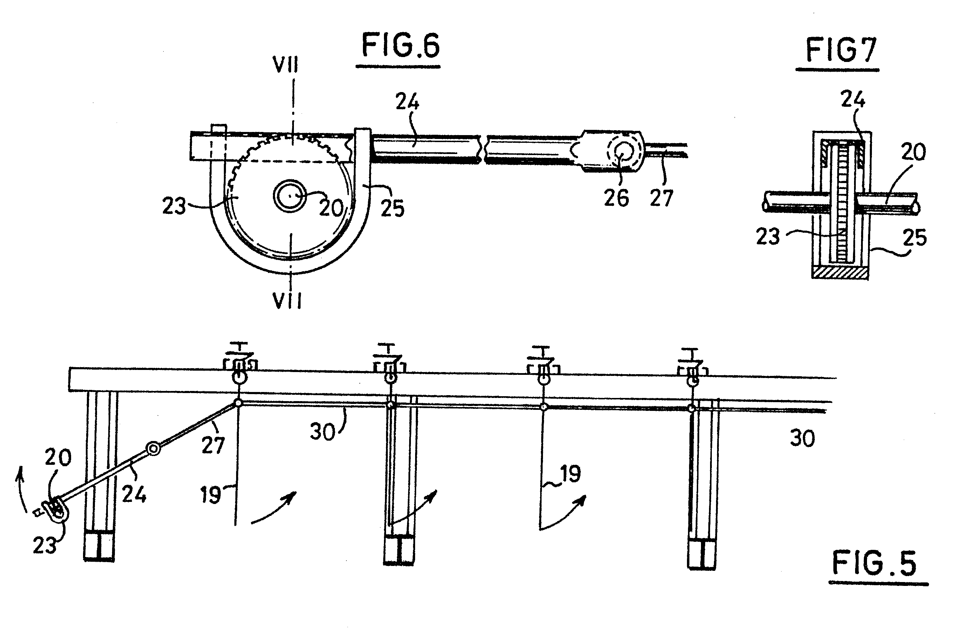

Le long de l'un des arbalétriers 10 s'étend un arbre 20 qui est guidé dans des paliers 21 fixé audit arbalatrier et dont une extrémité s'étend jusqu'au voisinage des ouvrants 8, tandis que l'autre extrémité est reliée à un moteur 22. Sur l'arbre 20 sont calés des pignons 23 (voir figures 6 et 7) qui coopèrent chacun avec une crémaillère 24 montée coulissante dans un étrier 25 enchâssant chaque pignon 23. Les crémaillères 24 sont constituées par des profilés en U dont l'âme est pourvue de perforations régulièrement espacées. Grâce à ce montage, la crémaillère peut être
tirée ou poussée suivant toutes les directions dans le plan
du pignon 23.

Les crémaillères 24,à l'une de leurs extrêmités,
sont pourvues d'une ouverture 26 dans laquelle s'articule
l'une des extrémités d'une biellette 27 reliée à une patte 29
prévue le long d'un bord des volets 19.

Les différents volets 19 alignés entre deux pannes
6 adjacentes sont reliées au volet 19 sur la patte 29 duquel
s'articule la biellette 27, par des tringles 30 articulées
sur les pattes 29, de sorte, qu'en faisant tourner l'arbre 20
dans le sens de la flèche f (voir figure 5), tous les volets
19 alignés entre deux pannes adjacentes 6 sont basculés dans
le sens de la flèche g. Au contraire, si l'arbre 20 est entraîné dans le sens opposé, les volets 19 basculent dans
l'autre sens.

Comme tous les volets 19 d'un versant sont ainsi
reliés aux différentes crémaillères 24, on pourra par la simple rotation de l'arbre 20, masquer plus ou moins ledit versant.

Le second arbalétrier 10 peut comporter la même
disposition et son propre moteur, ou comporter un arbre tel
que l'arbre 20 relié à ce dernier par un cardan  de sorte,
qu'avec un seul moteur, on peut commander l'ensemble des
volets des deux versants.

Les ouvrants 8 comportent également des volets 19a
qui sont montés sous les barres à vitre 7, de la même façon
que cela vient d'être décrit, toutefois, comme lesdits ouvrants 8 doivent basculer le long du faîtage, il est prévu
une commande indépendante des volets 19a.

Les différents volets 19a sont reliés entre eux
par des tringles 30a qui s'articulent sur des pattes 29a, le
volet 19a situé à l'une des extrêmités de la serre étant relié
à une biellette 27a reliée à une crémaillère 24a entraînée par un pignon avec un étrier, comme représenté à la figure 6. Comme, suivant la position des ouvrants 8, la distance entre l'axe du pignon et la patte 29a est variable, l'extrémité de la biellette 27a qui coopère avec ladite patte 29a, est pourvue d'une ouverture oblongue 31.

Il peut être prévu, soit que la longueur des volets 19a est légèrement inférieur à la largeur des ouvrants 8, de manière à ne pas gêner l'ouverture de ceux-ci, soit que lesdits ouvrants ne puissent passer de la position de fermeture à la position d'ouverture que si les volets 19a sont basculés pour s'étendre contre les vitres, lesdits volets 19a pouvant ensuite, après ouverture, être ramenés en position verticale.

Une telle installation permet de supprimer les ombrages et en fermant plus ou moins les volets, de diminuer l'action directe du soleil, ce qui évite d'avoir à blanchir.

Si on utilise des volets 19-19a avec une face brillante et une face noire, on peut dans la journée, en hiver, exposer la face noire vers l'extérieur, tandis que la face brillante est tournée vers l'intérieur la nuit, ce qui permet de réfléchir l'infrarouge vers l'intérieur.

On peut prévoir, à l'extérieur de la serre, des moyens pour mesurer l'ensoleillement qui sont reliés à un dispositif d'asservissement pour commander le moteur 22, de manière qu'automatiquement soit choisi le pourcentage de lumière que doit recevoir la serre par réflexion partielle vers l'extérieur.

Bien entendu, l'invention n'est pas limitée au mode de réalisation qui vient d'être décrit et représenté. On pourra y apporter de nombreuses modifications de détails sans sortir pour cela du cadre de l'invention.

7        **0132181**

<u>R E V E N D I C A T I O N S</u>

1° - Perfectionnements aux serres du type constitué
d'une structure métallique formée de fermes (5) avec des arbalétriers (10) supportant des pannes (6) sur lesquelles sont
fixées des barres à vitres (7) supportant le vitrage de la toiture, caractérisé en ce qu'elles comportent des supports (12)
pour surélever les pannes (6) par rapport aux fermes et sous
chaque barre à vitres (7) des volets 19 montés basculants et
reliés à des moyens pour commander leur basculement.

2° - Perfectionnements aux serres selon la revendication 1, caractérisés en ce que les barres à vitres (7) sont
du type à double vitrage présentant une raînure (7a) destinée
à recevoir des têtes de vis pour la fixation sur les pannes
(6), les volets (19) étant montés articulés sur des axes (18)
solidaires de noix (17) engagées dans les raînures (7a).

3° - Perfectionnements aux serres selon la revendication 1, caractérisés en ce que les volets sont réfléchissants sur les deux faces.

4° - Perfectionnements aux serres, selon la revendication 1, caractérisés en ce que les volets sont réfléchissants sur une face et noirs sur l'autre face.

5° - Perfectionnements aux serres selon la revendication 1, caractérisés en ce que les volets (19) sont en
aluminium mince.

6° - Perfectionnements aux serres selon la revendication 1, caractérisés en ce que les volets (19) disposés entre deux pannes (6) voisines, sont reliés entre eux par des
tringles (30), tandis que le volet (19) situé à une extrémité est relié par une biellette (27) à un organe moteur (23)
pour commander le basculement de l'ensemble desdits volets
(19) disposés entre deux pannes voisines.

7° - Perfectionnements aux serres selon les revendications 1 et 6, caractérisés en ce qu'elles comportent
le long d'un arbalétrier (10) de l'extrémité de la structure
métallique, un arbre (20) guidé dans des paliers (21) et entraîné par un moteur (22), une série de pignons (23) calés sur ledit arbre (20) chaque pignon (23) correspondant à une série de volets (19) disposés entre deux pannes voisines (6), et coopérant avec une crémaillère (24) dont une extrémité est articulée à la biellette (27) reliée à un volet (19) d'extrémité, ladite crémaillère (24) étant guidée dans un étrier monté libre autour du pignon (23).

8° - Perfectionnements aux serres selon la revendication 7, caractérisés en ce que il est prévu, le long de chacun des arbalétriers (10) d'une même ferme d'extrémité, un arbre (20) guidé dans les paliers (21) correspondants, l'un des arbres étant relié à un moteur par une extrémité, tandis que l'autre extrémité est reliée par un cardan à l'extrémité correspondante de l'autre arbre.

FIG.1

**FIG.2**

**FIG.8**

7d

7c

7c

7b

7b

7a

17

18

19

## FIG.3

29

12

19

12

29

VI

21

10

12

VI

27

20

22

## FIG.4

## FIG.6

24

VII

23
20
25

26  27

VII

## FIG7

24

20

23  25

## FIG.5

20

27

30

24

19

19

30

23

4/4

0132181

**0132181**

Numéro de la demande

**RAPPORT DE RECHERCHE EUROPEENNE**

EP 84 40 1354

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 355 445 (PLASCON A.G.)<br><br>* page 2, lignes 9-32; page 4, lignes 9-14; page 5, lignes 19-31; figures 1,2,5 * | 1,3,5, 7 | A 01 G 9/22 |
| | --- | | |
| A | FR-A-2 282 027 (AGRINOVA S.p.A.)<br>* figure 1; page 3, lignes 15-24 * | 7 | |
| | --- | | |
| A | FR-A-2 236 410 (ABRAN J.)<br>* page 1; figure 5 * | 7 | |
| | ----- | | |

DOMAINES TECHNIQUES
RECHERCHES (Int. Cl. ³)

A 01 G

Le présent rapport de recherche a été établi pour toutes les revendications

| Lieu de la recherche | Date d'achèvement de la recherche | Examinateur |
|---|---|---|
| LA HAYE | 30-07-1984 | LINTZ C.H. |